# EUROPÄISCHE PATENTSCHRIFT

(11) **EP 3 016 843 B1**
(45) Veröffentlichungstag und Bekanntmachung des Hinweises auf die Patenterteilung: **28.11.2018**
(21) Anmeldenummer: 14730442.2
(22) Anmeldetag: 22.05.2014
(51) Int. Cl.: B65G 41/00, B62D 65/18

(54) **ÜBERFLURFÖRDEREINRICHTUNG MIT TRAGGERÜSTMODULEN**
OVERHEAD CONVEYING DEVICE HAVING SUPPORT FRAMEWORK MODULES
CONVOYEUR AÉRIEN ÉQUIPÉ DE MODULES DE CHÂSSIS PORTEUR

(30) Priorität: 05.07.2013 DE 102013213222
(43) Veröffentlichungstag der Anmeldung: 11.05.2016
(73) Patentinhaber: Hösker, Torsten, 74706 Osterburken (DE)
(72) Erfinder: Hösker, Torsten, 74706 Osterburken (DE)
(74) Vertreter: advotec.
(86) Internationale Anmeldenummer: PCT/EP2014/060533
(87) Internationale Veröffentlichungsnummer: WO 2015/000635

(56) Entgegenhaltungen:
- EP-A1- 2 340 982
- DE-A1- 19 806 963
- DE-A1-102011 008 623
- DE-T2- 60 202 985
- DE-U1-202009 006 856
- JP-A- 2003 341 818
- JP-A- 2008 222 137
- JP-A- 2009 012 141

## Beschreibung

Die Erfindung betrifft eine Überflurfördereinrichtung zur Integration in einer Montageanlage, die zum Transport von Fahrzeugkomponenten geeignet ist, nach dem Oberbegriff des Anspruchs 1.

In Montageanlagen zur Herstellung von Fahrzeugen werden verschiedene Arten von Fördereinrichtungen sowie Überflurfördereinrichtungen eingesetzt. Aufgrund der zum jeweils herzustellenden Fahrzeug individuell abgestimmten Montageanlagen und hieran ausgerichteten Fördereinrichtungen, werden entsprechend die betrachteten Überflurfördereinrichtungen individuell ausgeführt und hergestellt. Eine Überflurfördereinrichtung der vorliegenden Art betrifft hierbei diejenigen Fördereinrichtungen, unterhalb deren zumindest soviel freier Bewegungsraum verbleibt, dass eine Person ungehindert darunter laufen kann. In aller Regel wird hierbei eine freie Durchgangshöhe von mindestens 2,5 m oder mehr angestrebt, so dass ebenso Gabelstapler oder andere Transportfahrzeuge die Überflurfördereinrichtung unterqueren können. Ebenso werden entsprechende Überflurfördereinrichtungen eingesetzt, um einen zusätzlichen Montageraum zu gewinnen, wobei unter der Überflurfördereinrichtung auf dem Boden stehend eine weitere Fördereinrichtung oder eine sonstige Montageeinlage, beispielsweise ein Montageroboter, angeordnet werden kann. Zur Integration entsprechender Überflurfördereinrichtungen in eine gesamte Montageanlage in einem Gebäude ist es im Stand der Technik üblich, ein Traggerüst zur Aufstellung der eigentlichen Fördereinrichtung vor Ort im Gebäude aus Stahlträgern oder dergleichen zusammenzubauen, wobei in aller Regel die Streben und Pfeiler baustellenseitig miteinander verschweißt werden. Dies gestattet die Anpassung an die vorliegenden Verhältnisse sowohl hinsichtlich der Montageanlagen als auch hinsichtlich der Gebäudemöglichkeiten und insbesondere können bereits vorhandene Montageanlagen oder Gebäudeeinbauten Berücksichtigung finden.

Die JP 2003 341818 A, die EP 2 340 982 A1, die DE 10 2011 008623 A1 und die JP 2009 012141 A beschreiben Überflurfördereinrichtungen mit einem modularen Aufbau gemäß dem Oberbegriff des Anspruchs 1.

Die gattungsgemäße Überflurfördereinrichtung ist zunächst einmal bestimmt zur Integration in einer Montageanlage zum Transport von Fahrzeugkomponenten. Um welche Art von Fahrzeugkomponenten es sich hierbei handelt, ist ohne Belang. Wesentlich ist, dass die Überflurfördereinrichtung in einem gesamten Montagekonzept eingebunden wird und hierbei die Herstellung eines Fahrzeugs durch den Transport der zugewiesenen Fahrzeugteile ermöglicht. Hierzu weist die Überflurfördereinrichtung ein Traggerüst und zumindest eine Fördereinrichtung auf.

Gattungsgemäß weist das Traggerüst eine Länge von mehr als 5 m und eine Breite von mehr als 2 m auf. In welcher Höhe das Traggerüst der Überflurfördereinrichtung über dem Boden des bestimmungsgemäßen Gebäudes angebracht wird, ist für die vorliegende Erfindung ohne Belang, jedoch wird die freie Durchgangshöhe unterhalb des Traggerüstes zumindest 2 m betragen, um eine taugliche Nutzhöhe unterhalb des Traggerüsts zu gewährleisten. Das Traggerüst seinerseits wird hierbei von längsgerichteten und/oder quergerichteten oder diagonal miteinander verbundenen Tragbalkenelemente realisiert. Die Tragbalkenelemente sind hierbei in aller Regel stabartig ausgeführt und können sowohl Rohrprofile, T-Träger oder sonstige Formate aufweisen und hierbei sowohl als Zug-, Druck- oder Biegeträger ausgelegt sein.

Die zugehörige Fördereinrichtung ist hierbei auf dem Traggerüst montiert und ermöglicht einen Transport entsprechender Fahrzeugkomponenten, wobei der Transport in aller Regel entlang der Längsrichtung der Überflurfördereinrichtung vonstatten geht.

Weiterhin umfasst das Traggerüst Lagerungsmittel, auf denen die Überflurfördereinrichtung in der Montageanlage gelagert wird. Ob es sich hierbei um Festlager, Loslager oder sonstige Lagerungsarten handelt, ist zunächst ohne Belang. Zumindest stützt sich das Traggerüst im Wesentlichen in Richtung der Schwerkraft an den Lagerungsmitteln auf und von der Montageanlage bzw. dem Gebäude bereitgestellten Gegenlagern ab.

Die üblicherweise anzufindende Praxis, vor Ort das Traggerüst anhand der vorgefundenen Gegebenheiten zusammenzusetzen, führt zu einer in aller Regel unterbleibenden statischen Berechnung und vorherigen Detail-Konstruktion des Traggerüsts der Überflurfördereinrichtung. Aufgrund der nur unzureichend durchgeführten Berechnungen des Traggerüsts wird zur Sicherheit dieses in aller Regel deutlich überdimensioniert ausgeführt, wobei jedoch auch dabei keine Gewähr geleistet ist, dass eine hinreichende Sicherheit vorhanden ist.

Von besonderem Nachteil bei der aus dem Stand der Technik bekannten Ausführung einer Überflurfördereinrichtung ist jedoch der für den Aufbau der entsprechenden Bestandteile in der Montageanlage erforderliche erhebliche Zeitaufwand. Während dieser Aufbauarbeiten steht zwangsläufig im Bereich der herzustellenden Überflurfördereinrichtung die Montageanlage nicht anderweitig zur Verfügung. Insbesondere bei einem Umbau der Montageanlage von einer Ausführung beispielsweise zur Herstellung eines bestimmten Fahrzeugmodells zu einer neuen Ausführung der Montageanlage zur Herstellung eines geänderten Fahrzeugmodells führt dies zu einem unerwünschten Produktionsausfall für die Dauer des Aufbaus der Überflurfördereinrichtung.

Aufgabe der vorliegenden Erfindung ist es daher, den Aufbau einer Überflurfördereinrichtung in einer Montageanlage zu Vermeidung der beschriebenen Nachteile zu verbessern.

Diese Aufgabe wird durch eine Überflurfördereinrichtung nach der Lehre des Anspruchs 1 gelöst.

Vorteilhafte Ausführungsformen der Erfindung sind Gegenstand der Unteransprüche.

Grundgedanke der Überflurfördereinrichtung ist es, dass das Traggerüst aus zumindest zwei in Richtung des Förderkorridors hintereinander angeordneten Traggerüstmodulen gebildet wird. Durch den modularen Aufbau des Traggerüsts ist es möglich, die Fertigungskosten und den Montageaufwand erheblich zu verringern. So kann durch Kombination mehrerer Traggerüstmodule das Traggerüst individuell auf das jeweilige Anforderungsprofil angepasst werden. Insbesondere kann die Größe des Traggerüsts durch Hinzufügen weiterer Traggerüstmodule letztendlich unbeschränkt erweitert werden. Die einzelnen Traggerüstmodule können durch Verwendung von Gleichteilen kostengünstig hergestellt und montiert werden. Im Ergebnis ist es somit möglich, das Traggerüst aus einem Modulbaukasten zusammenzustellen, wobei die einzelnen Bestandteile des Modulbaukastens, nämlich die einzelnen Traggerüstmodule, in Serie gefertigt werden können.

Erfindungsgemäß ist es vorgesehen, dass die Traggerüstmodule in Art eines räumlichen Fachwerks ausgeführt sind. Das heißt, dass das selbsttragende Traggerüstmodul aus längsgerichteten, quergerichteten, diagonalen und aufrecht stehenden miteinander verbundenen Tragbalkenelementen gebildet wird. Durch diese Fachwerkkonstruktion unter Verwendung von Tragbalkenelemente mit einem geschlossenen Rohrquerschnitt kann eine hohe Steifigkeit der Traggerüstmodule bei geringem Gewicht gewährleistet werden, was insbesondere den Transport der vormontierten Überflurfördereinrichtung begünstigt.

Um die Montage des Traggerüsts aus den einzelnen Traggerüstmodulen zu vereinfachen, ist es besonders vorteilhaft, wenn am Übergang zwischen benachbarten Traggerüstmodulen Befestigungseinrichtungen vorgesehen sind. Diese Befestigungseinrichtungen ermöglichen die Verbindung von benachbarten Traggerüstmodulen, so dass das Traggerüst dadurch die notwendige Stabilität erhält. Die Befestigungseinrichtungen können beispielsweise in der Art von Befestigungsflanschen ausgestaltet sein, die mittels Verbindungsschrauben miteinander verbunden werden.

In der Grundform der erfindungsgemäßen Überflurfördereinrichtung ist ein Eingabe-Traggerüstmodul, an dem die Eingabestelle für die Fahrzeugkomponenten vorgesehen ist, und ein Ausgabetraggerüstmodul, an dem die Ausgabestelle für die Fahrzeugkomponenten vorgesehen ist, notwendig. Durch die Kombination eines Eingabe-Traggerüstmoduls mit einem Ausgabe-Traggerüstmodul kann ein Traggerüst zur Herstellung einer erfindungsgemäßen Überflurfördereinrichtung hergestellt werden.

Um das Traggerüst der erfindungsgemäßen Überflurfördereinrichtung in beliebiger Länge erweitern zu können, sind so genannte Zwischen-Traggerüstmodule vorzusehen. Ein oder mehrere Zwischen-Traggerüstmodule werden dann zwischen dem Eingabe-Traggerüstmodul und dem Ausgabe-Traggerüstmodul angeordnet, so dass die Länge des Traggerüsts insgesamt sich aus der Addition der Länge der einzelnen Traggerüstmodule ergibt.

Im Hinblick auf die Kosten ergeben sich besondere Vorteile, wenn die Zwischen-Traggerüstmodule jeweils im Wesentlichen baugleich ausgebildet sind, so dass diese in Serie gefertigt werden können.

Durch Verwendung der erfindungsgemäßen Traggerüstmodule können Überflurfördereinrichtungen mit letztendlich beliebiger Länge hergestellt werden. Mit Erhöhung der Länge des Traggerüsts gehen allerdings Probleme im Hinblick auf Vibrationen und thermische Ausdehnung einher. Um diese Probleme zu lösen ist es deshalb besonders vorteilhaft, wenn zwischen benachbarten Traggerüstmodulen Ausgleichselemente angeordnet sind. Diese Ausgleichselemente können beispielsweise elastisch oder beweglich aufgebaut sein, um dadurch Vibrationen zwischen den einzelnen Traggerüstmodulen zu dämpfen und/oder Temperaturspannungen aufgrund der Längenausdehnungen abzubauen.

Gemäß einer bevorzugten Ausführungsform ist es vorgesehen, dass die Lagerungsmittel zur Abstützung des Traggerüstmoduls in der gewünschten Höhe in der Art von Säulenportalen ausgebildet sind. Diese Säulenportale sind dabei dadurch charakterisiert, dass zumindest zwei Stützsäulen vorhanden sind, deren untere Enden auf dem Boden der Montageanlage angebracht werden. Weiter umfasst das Säulenportal eine Querbrücke, die zwischen den zwei Stützsäulen angebracht wird. Auf diese Querbrücke können die Traggerüstmodule von oben aufgelegt werden. Die Verwendung von Säulenportalen zur Abstützung des Traggerüstmoduls ermöglicht es die Überflurfördereinrichtung stufenweise aus vorgefertigten Komponenten vorzunehmen. Bei der Montage der Überflurfördereinrichtung können zunächst die Säulenportale einzeln positioniert und am Hallenboden fixiert werden. Anschließend können dann die Traggerüstmodule in vorgefertigter Form auf die Querbrücken der Säulenportale aufgelegt werden, wozu beispielsweise ein geeignetes Hebefahrzeug, beispielsweise ein ausreichend großer Gabelstapler, eingesetzt werden kann. Im Ergebnis kann somit die Montagezeit zum Aufbau der Überflurfördereinrichtung signifikant verkürzt werden. Außerdem können die Säulenportale hinsichtlich ihrer mechanischen Stabilität sehr gut berechnet werden, so dass die üblichen Überdimensionierungen nicht erforderlich sind. Das auf die Querbrücken aufgelegte Traggerüstmodul kann außerdem optimal ausgerichtet und justiert werden, bevor die Traggerüstmodule an den Querbrücken befestigt werden.

Gemäß einer bevorzugten Ausführungsform ist es vorgesehen, dass zwischen den Säulenportalen und dem Traggerüstmodul eine Trennebene verläuft, wobei die Trennebene von Befestigungsmitteln, mit denen die Traggerüstmodule auf dem Säulenportal fixierbar sind, übergriffen wird. Als Befestigungsmittel im Sinne dieses Anspruchs sind beispielsweise Befestigungsschrauben, Befestigungsnieten oder auch Schweißnähte anzusehen. Durch die durchgängige Trennebene zwischen den Säulenportalen einerseits und dem Traggerüstmodul andererseits wird es ermöglicht, dass die Traggerüstmodule nach dem Auflegen auf die Querbrücken der Säulenportale optimal in ihrer Lage justiert werden können.

Um eine möglichst hohe Stabilität der Überflurfördereinrichtung zu gewährleisten, ist es besonders vorteilhaft, wenn die Stützsäulen und/oder die Querbrücken des Säulenportals aus Rohrmaterial mit geschlossenem Rohrquerschnitt hergestellt sind. Insbesondere Rohre mit rechteckförmigem oder quadratischem Querschnitt sind hervorragend zur Herstellung des Säulenportals geeignet.

In welcher Weise die Querbrücke mit den Stützsäulen verbunden wird, um das Säulenportal der erfindungsgemäßen Überflurfördereinrichtung zu bilden, ist grundsätzlich beliebig. Im Hinblick auf eine möglichst hohe Stabilität ist es besonders vorteilhaft, wenn die oberen Enden der Stützsäulen und/oder die seitlichen Enden der Querbrücken auf Gehrung geschnitten sind und die Endquerschnitte der beiden Stützsäulen flächenbündig auf den Endquerschnitten der Querbrücke zur Anlage kommen.

Zur Fixierung der Endquerschnitte der Querbrücke einerseits und der Stützsäulen andererseits sind beliebige Befestigungsmittel denkbar. Eine besonders hohe Stabilität ergibt sich, wenn die Endquerschnitte miteinander verschweißt sind.

Das zur Bildung der erfindungsgemäßen Überflurfördereinrichtung erforderliche Säulenportal weist aufgrund seiner portalförmigen Bauform einen großen Querschnitt auf, so dass beim Transport des Säulenportals ein entsprechend großer Transportraum notwendig ist. Um den notwendigen Transportraum zum Transport des Säulenportals zu reduzieren ist es deshalb besonders vorteilhaft, wenn die Stützsäulen zweiteilig ausgebildet sind, wobei die beiden Teile der Stützsäulen in einer Verbindungsstelle miteinander verbunden werden können. Die Trennstelle der Stützsäulen sollte dabei möglichst in der Nähe der Anschlussstelle zur Querbrücke des Säulenportals liegen. Im Ergebnis kann somit das Säulenportal in drei Teile zerlegt werden, die jeweils eine im Wesentlichen axiale Längenausdehnung aufweisen und entsprechend auf geringem Transportraum transportiert werden können. Am eigentlichen Einsatzort kann das Säulenportal durch Montage der unteren Teile der Stützsäulen an die oberen Teile der Stützsäulen, die mit der Querbrücke verbunden sind, zusammengesetzt werden. Um die Traggerüstmodule nach dem Aufrichten der Säulenportale an der Querbrücke zu befestigen, ist es besonders vorteilhaft, wenn an der Querbrücke Befestigungslaschen vorgesehen sind. Durch die Art der Anordnung der Befestigungslaschen kann außerdem eine bestimmte Ausrichtung des Traggerüstmoduls relativ zu den Säulenportalen vorgegeben werden.

Erfindungsgemäß wird die Integration der Überflurfördereinrichtung in einer Montageanlage mit geringen Stillstandzeiten in Folge der Aufstellung der Überflurfördereinrichtung durch eine selbsttragende Ausführung des Traggerüstmoduls und eine Vormontage des Traggerüstmoduls erzielt. Hierbei können die Traggerüstmodule vormontiert vom Herstellungsort zum Verwendungsort transportiert werden.

Besonders vorteilhaft ist es, wenn sowohl die Traggerüstmodule als auch ebenso die Fördereinrichtung auf den Traggerüstmodulen vor einer Aufstellung am Verwendungsort vormontiert werden. Hierbei können die Traggerüstmodule nebst der darauf angeordneten Fördereinrichtung vormontiert vom Herstellungsort zum Verwendungsort transportiert werden.

Es ist offensichtlich, dass es zur Einbindung der Fördereinrichtung in der Montageanlage einer Verbindung von diversen Schnittstellenverbindungen, sei es Stromverbindungen, Datenverbindungen oder Prozessleitungen, wie beispielsweise Druckluft oder Hydrauliköl, zwischen der vormontierten Überflurfördereinrichtung und der sonstigen Montageanlage bedarf.

Zumindest ist es erfindungsgemäß erforderlich, dass das eigentliche Traggerüstmodul bereits vormontiert ist und vorteilhaft weiterhin die Fördereinrichtung noch vor einer Aufstellung am Verwendungsort auf dem Traggerüstmodul montiert ist. Somit bedarf es zur Realisierung der Überflurfördereinrichtung in der Montageanlage lediglich der Freischaffung entsprechenden Platzes und Schaffung entsprechender Gegenlager zur Aufnahme der Lagerungsmittel, wobei sodann die vormontierte Überflurfördereinrichtung lediglich mittels Kran aufgestellt werden muss. Hierdurch wird die Montagezeit zur Aufstellung der Überflurfördereinrichtung gegenüber allem Bekannten drastisch gesenkt. Wenngleich dies mit geringem Nachteil hinsichtlich der flexiblen Anpassung an die örtlichen Gegebenheiten verbunden ist, so sind dennoch die Vorteile hinsichtlich des geringen Stillstands der Montageanlage deutlich von Vorteil.

Weiterhin ist es von besonderem Vorteil, wenn die Traggerüstmodule von einer Schweißkonstruktion gebildet werden. Das heißt, dass das selbsttragende Traggerüstmodul im Wesentlichen aus Stahlstreben und gegebenenfalls sonstigen Stahlelementen, wie z.B. Knotenblechen, gebildet wird, welche miteinander verschweißt werden. Sofern die Fördereinrichtung von geringem Gewicht ist oder eine Gewichtseinsparung insgesamt von hoher Wichtigkeit ist, ist es ebenso denkbar, die Traggerüstmodule beispielsweise aus Aluminium herzustellen und ebenso die einzelnen Elemente, wie Streben und Knotenelemente, miteinander zu verschweißen.

Eine Schweißkonstruktion hat gegenüber einer zusammen geschraubten Ausführung unter anderem den Vorteil, dass nicht die Gefahr besteht, dass zu einem späteren Zeitpunkt vom Anlagenbetreiber eine unzulässige Änderung am Traggerüstmodul vorgenommen wird. Bei Ausführungen aus dem Stand der Technik ist dies aufgrund der in der Regel vorhandenen Überdimensionierung ggf. unkritisch. Bei einer spezifischen Auslegung des Traggerüstmoduls auf die zu tragende Fördereinrichtung kann ein Eingriff in das Traggerüstmodul zu weitreichenden Schäden führen, dem mit einer Schweißkonstruktion entgegen gewirkt wird.

Weiterhin ist es von besonderem Vorteil, wenn entlang zumindest einer Längsseite der Fördereinrichtung ein Wartungsgang vorhanden ist. Dieser ist hier dergestalt auszuführen, dass er gefahrfrei begehbar ist. Hierzu wird der Wartungsgang an einer Längsseite des Traggerüstmoduls angeordnet und mit diesem verbunden. Hierbei kann die Verbindung des Wartungsgangs mit dem Traggerüstmodul sowohl in der Vormontage der Überflurfördereinrichtung vorgenommen werden, als es auch ebenso denkbar ist, den Wartungsgang als ein in sich vormontiertes Anbauteil vor Ort am Traggerüstmodul zu befestigen.

Besonders vorteilhaft ist es, wenn Wartungsgänge beidseitig der Fördereinrichtung vorhanden sind. Zur Erhöhung der Steifigkeit der gesamten Anordnung und insbesondere der Stabilität der Wartungsgänge sind hierbei die beidseitig längs der Fördereinrichtung vorhandenen Wartungsgänge mittels Verbindungsträger miteinander verbunden.

Im Falle von beidseitig vorhandenen Wartungsgängen mit zwischenliegender Fördereinrichtung, wobei die Wartungsgänge endseitig mittels Verbindungsträger verbunden sind, ist es weiterhin besonders vorteilhaft, wenn zumindest eine Vertikaltransportöffnung vorgesehen wird. Diese ist zwischen Traggerüstmodul, Wartungsgängen und Verbindungsträger anzuordnen. Durch diese Vertikaltransportöffnung können sodann die Fahrzeugkomponenten von der Fördereinrichtung, welche sich oberhalb des Traggerüstmoduls befindet, in weitgehend vertikaler Richtung durch die Überflurfördereinrichtung von oberhalb des Traggerüstmoduls nach unterhalb des Traggerüstmoduls transportiert werden. Somit kann eine Übergabe von oberhalb des Traggerüstmoduls transportierten Fahrzeugkomponenten an eine andere Fördereinrichtung oder eine Montageeinrichtung unterhalb der Überflurfördereinrichtung vonstatten gehen.

Hierbei ist es entsprechend besonders vorteilhaft, wenn an beiden Enden der Fördereinrichtung entsprechende Vertikaltransportöffnungen vorgesehen werden, so dass an einem Ende der Überflurfördereinrichtung eine Übernahme von Fahrzeugkomponenten von unterhalb der Überflurfördereinrichtung erfolgen kann. Sodann kann die Fahrzeugkomponente entlang der Überflurfördereinrichtung von der darauf befindlichen Fördereinrichtung transportiert werden und nachfolgend am jeweils anderen Ende der Überflurfördereinrichtung durch die andere Vertikaltransportöffnung wiederum herab von oberhalb des Traggerüstmoduls nach unterhalb des Traggerüstmoduls übergeben werden.

Bei entsprechend vorhandenen beidseitigen Wartungsgängen mit der zwischenliegenden Vertikaltransportöffnung am Ende des Traggerüstmoduls ist es weiterhin besonders vorteilhaft, wenn ein zwischen Offenstellung und Geschlossenstellung verstellbares Schließmittel vorhanden ist. Hierbei ist das Schließmittel begehbar dergestalt auszuführen, dass es in der Offenstellung die erforderliche Vertikaltransportöffnung zur Nutzung der Überflurfördereinrichtung frei gibt und bei einer Geschlossenstellung einen vorteilhaft stufenfreien Übergang zwischen den beiden Wartungsgängen ermöglicht. Somit kann im Wartungsfall bei in aller Regel vorliegendem Stillstand der Fördereinrichtung diese im Wesentlichen umlaufend mittels der Wartungsgänge und dem verbindenden Schließmittel begangen werden.

Aufgrund der Vormontage der Überflurfördereinrichtung und der entsprechend auf das Gewicht der Überflurfördereinrichtung und deren Gewichtsverteilung ausgelegten Steifigkeit des Traggerüstmoduls ist es besonders vorteilhaft möglich, eine variable veränderbare Aufstellung des Traggerüstmoduls in der Montageanlage zuzulassen. Hiermit wird insbesondere der Nachteil kompensiert, dass nicht, wie im Stand der Technik, eine Anpassung an die vor Ort gefundenen Gegebenheiten erfolgen kann, sondern vielmehr die Überflurfördereinrichtung fertig vormontiert mit definierten Positionen der Lagerungsmittel eine entsprechende Möglichkeit zur Aufstellung in der Montageanlage vorfinden muss.

Hierbei ist es besonders vorteilhaft, wenn die Anzahl N_{L} an Lagerungsmitteln größer ist, als die zur Lagerung erforderliche Anzahl N_{E}. Das heißt, dass am Traggerüstmodul eine Anzahl N_{L} von Lagerungsmitteln, auf denen jeweils eine Aufstellung in der Montageanlage erfolgen kann, vorhanden ist, jedoch zur Aufstellung der Überflurfördereinrichtung in der Montageanlage es gerade nicht erforderlich ist, dass jedes dieser vorhandenen Lagerungsmittel genutzt wird. Vielmehr ist es hinreichend, wenn lediglich in der erforderlichen Anzahl N_{E} Gegenlager vorhanden sind. Hierbei ist es weiterhin vorgesehen, dass die Auswahl der von den vorhandenen zu nutzenden Lagerungsmittel bei Aufstellung der Überflurfördereinrichtung in der Montageanlage beliebig in erforderlicher Anzahl N_{E} erfolgen kann. Dies bedeutet naheliegend, dass die Überflurfördereinrichtung unvermindert an allen vorhandenen Lagerungsmitteln in der Montageanlage auf Gegenlagern gelagert werden kann.

Besonders vorteilhaft ist hierbei eine Ausführung, welche zumindest sechs Lagerungsmittel aufweist, wobei die erforderliche Anzahl N_{E} kleiner/gleich dem aufgerundeten 0,72-fachen der Anzahl N_{L} der vorhandenen Lagerungsmittel ist. Das heißt, dass bei sechs vorhandenen Lagerungsmitteln die Aufstellung auf zumindest fünf Gegenlagern zu erfolgen hat. Bei sieben oder acht vorhandenen Lagerungsmitteln hat die Aufstellung mit zumindest sechs der vorhandenen Lagerungsmittel zu erfolgen. Bei neun vorhandenen Lagerungsmitteln sind es entsprechend sieben zu verwendende Lagerungsmittel, usw. Besonders vorteilhaft ist es, wenn die Steifigkeit des Traggerüstmoduls derart gewählt wird, dass insbesondere lediglich die aufgerundet 0,6-fache Anzahl N_{L} der vorhandenen Lagerungsmittel als erforderliche Anzahl N_{E} notwendig ist.

Weiterhin ist es vorteilhaft, wenn die Überflurfördereinrichtung Stützelemente aufweist, auf denen jeweils ein Lagerungsmittel angeordnet ist. Insofern bedarf es in vorteilhafter Ausführung derjenigen Anzahl an Stützelementen entsprechend der erforderlichen Anzahl N_{E} der Lagerungsmittel, wobei in vorteilhafter Ausführung dennoch zu jedem Lagerungsmittel ein Stützelement zugeordnet wird. Hierbei können die Stützelemente freistehende Stützsäulen und/oder Wandkonsolen und/oder freihängende Zugelemente sein. Zumindest ist vorgesehen, dass die Überflurfördereinrichtung mit dem Traggerüstmodul am Lagerungsmittel auf Gegenlagern der Stützelemente aufliegt, welche ihrerseits wiederum eine Anbindung in der Montageanlage bzw. dem Gebäude erfahren.

Hierbei ist es besonders vorteilhaft, wenn die Anzahl an Stützelementen größer ist als die zur Lagerung erforderliche Anzahl N_{E}, wobei ein Beliebiges der vorhandenen Stützelemente ohne Einschränkung der Verwendbarkeit der Überflurfördereinrichtung am Verwendungsort entfernt und/oder ersetzt werden kann. Somit kann insbesondere im Schadensfall, beispielsweise wenn ein Transportfahrzeug gegen einen Stützsäulen fährt, ein Stützsäulen demontiert werden, ohne dass dies die Tauglichkeit der Überflurfördereinrichtung sowohl hinsichtlich des Transports von Fahrzeugkomponenten mittels der Fördereinrichtung einschränkt, als auch die hinreichende Statik gewährleistet wird. Somit kann entsprechend im Schadensfall ein unkomplizierter Austausch erfolgen, ohne dass ein Montagestillstand eintreten muss.

In den nachfolgenden Figuren werden beispielhafte zwei Überflurfördereinrichtung mit einem Traggerüstmodul gelagert auf Säulenportalen skizziert.

Es zeigen:
- Fig. 1: eine erste beispielhafte Überflurfördereinrichtung bestehend aus zwei Traggerüstmodulen in perspektivischer Ansicht unter Weglassung der Fördereinrichtung;

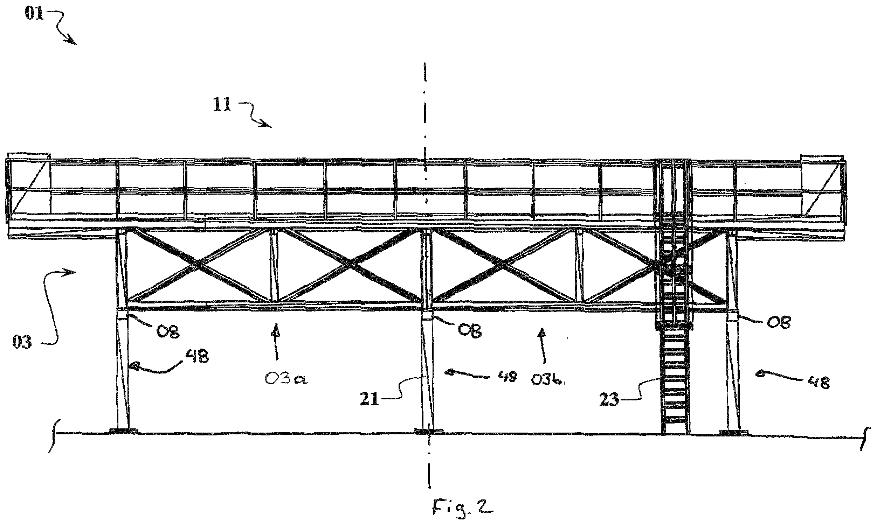

- Fig. 2: eine Seitenansicht der Überflurfördereinrichtung gemäß Fig. 1;

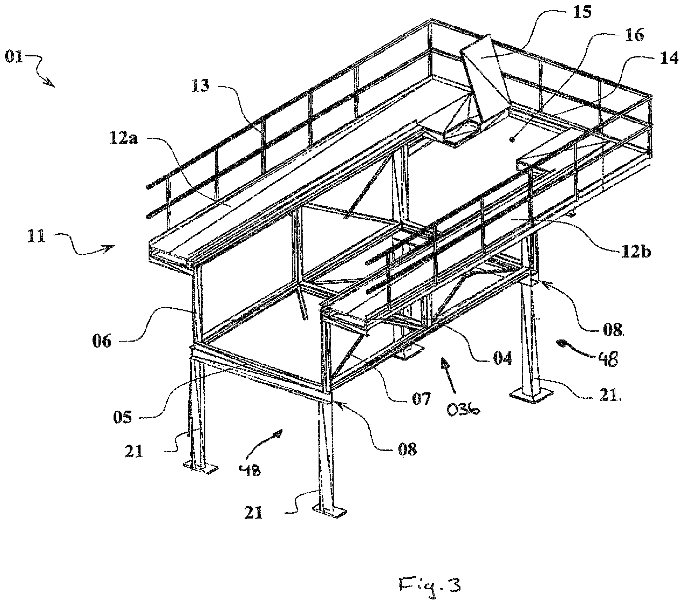

- Fig. 3: einen Halbschnitt der Überflurfördereinrichtung gemäß Fig. 1;
- Fig. 4: ein Traggerüstmodul der Überflurfördereinrichtung gemäß Fig. 1 in perspektivischer Ansicht;
- Fig. 5: eine zweite beispielhafte Überflurfördereinrichtung bestehend aus drei Traggerüstmodulen in seitlicher Ansicht;
- Fig. 6: eine zweite beispielhafte Überflurfördereinrichtung bestehend aus drei Traggerüstmodulen in seitlicher Ansicht;
- Fig. 7: eine Überflurfördereinrichtung in schematisierter Ansicht von vorne.

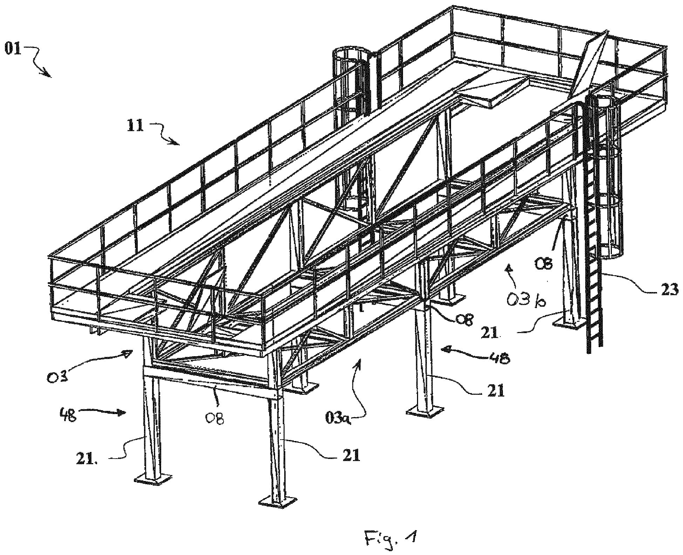

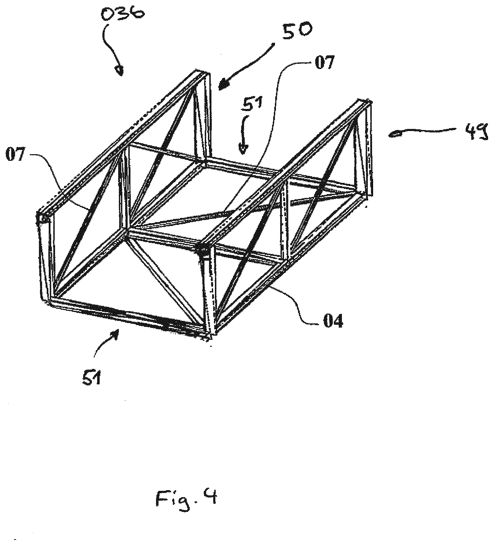

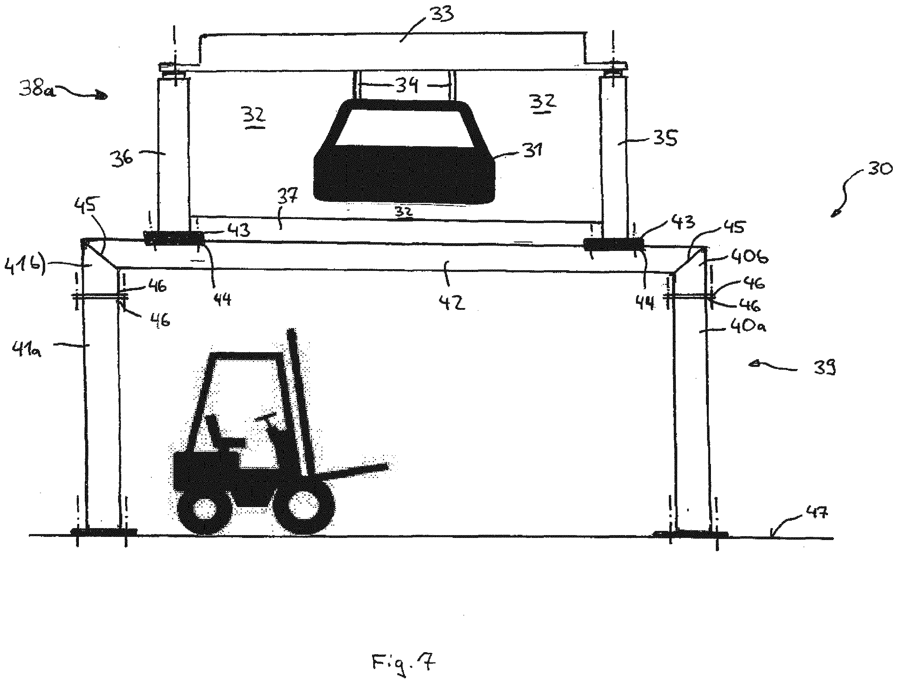

In der **Figur 1** ist eine perspektivische Darstellung einer Überflurfördereinrichtung 01 in beispielhafter Ausführungsform skizziert. Hierbei wurde jedoch auf die Darstellung der zur Überflurfördereinrichtung 01 gehörenden Fördereinrichtung verzichtet. Diese befindet sich, wie der Fachmann leicht nachvollziehen kann, mittig im Traggerüst 03 und steht hierbei je nach Ausführungsform erhaben über dem Traggerüst 03 über. Die Anordnung der Fördereinrichtung ist außerdem aus Fig. 7 ersichtlich. Das Traggerüst 03 besteht aus zwei hintereinander angeordneten Traggerüstmodulen 03a und 03b. Die Traggerüstmodule 03a und 03b sind hierbei jeweils in Art eines Fachwerks ausgeführt und umfassen eine Mehrzahl von miteinander verschweißten Tragbalkenelementen 04-07. Wie hierzu aus der **Figur 4** ersichtlich ist, werden die Traggerüstmodule 03a und 03b von längsgerichteten Tragbalkenelementen 04, quergerichteten Tragbalkenelementen 05, aufrechten Tragbalkenelementen 06 sowie diagonalen Tragbalkenelementen 07 gebildet. Die Traggerüstmodule 03a und 03b mit den Tragbalkenelementen 04, 05, 06 und 07 sind hierbei dergestalt ausgeführt, dass mit aufmontierter Fördereinrichtung eine hinreichende selbsttragende Eigensteifigkeit vorhanden ist, so dass ein Transport der gesamten Überflurfördereinrichtung 01 oder zumindest einzelner Traggerüstmodule 03a oder 3b mit aufmontierter Fördereinrichtung möglich ist. Dazu sind die Traggerüstmodule 03a und 03b jeweils aus zwei Seitenteilen 49 und 50 und einem Bodenteil 51 zusammengebaut. Die Seitenteilen 49 und 50 und das Bodenteil 51 weisen eine jeweils ebene Bauteilstruktur mit hoher Steifigkeit in der Bauteilebene auf. Die Seitenteilen 49 und 50 und das Bodenteil 51 sind aus den Tragbalkenelementen 04, 05, 06 und 07 zusammengesetzt. Das Traggerüst 03 ist hinsichtlich der Steifigkeit, insbesondere Biegesteifigkeit, dahingehend auszulegen, dass sowohl für den Transportfall als auch für die spätere Aufstellung die Lagerung auf den zugehörigen Säulenportalen 48 im Wesentlichen verformungsfrei möglich ist.

Entsprechend der jeweils zu bestimmenden statischen Auslegung der Überflurfördereinrichtung 01 ist das Traggerüst 03 auf einer Mehrzahl von Säulenportalen 48 gelagert. Jedes Säulenportal 48 besteht aus zumindest zwei Stützsäulen 21 und einer dazwischen angebrachten Querbrücke 08. Weiterhin ist in diesem Ausführungsbeispiel die Statik des Traggerüsts 03 derart ausgelegt und die Steifigkeit derart gewählt, dass die Stabilität der gesamten Anordnung auch bei Weglassen einzelner Stützsäulen gewährleistet ist. Somit ist es zum einen denkbar, im Aufstellungsfall in der Montageanlage lediglich fünf der dargestellten sechs Stützsäulen 21 einzusetzen oder es ist ebenso möglich, sechs Stützsäulen einzusetzen, wobei im Schadensfall, beispielsweise durch Kollision mit einem Fahrzeug, ein Stützsäulen ohne Einschränkung der Tauglichkeit der Überflurfördereinrichtung ersetzt werden kann.

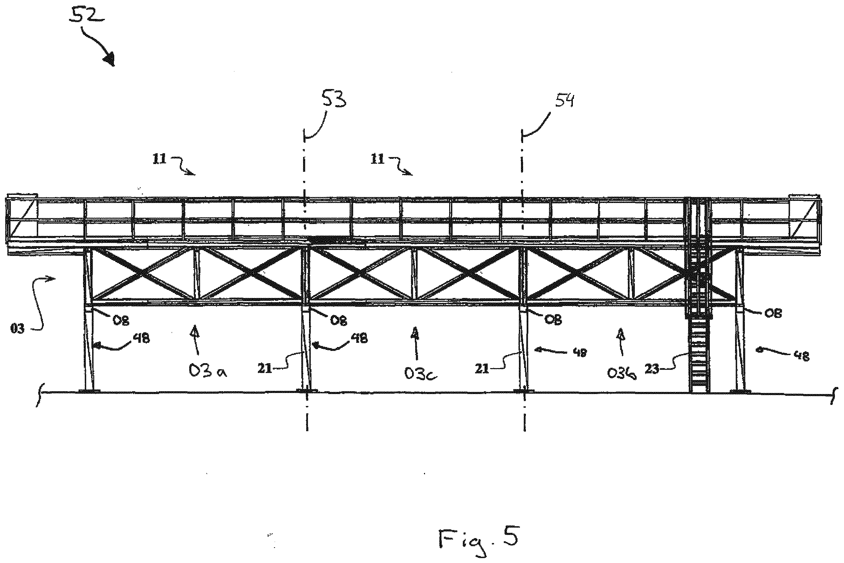

Fig. 5 zeigt eine zweite beispielhafte Überflurfördereinrichtung 52, deren Aufbau aus der Überflurfördereinrichtung 01 abgeleitet ist. Die Überflurfördereinrichtung 52 besteht aus dem Eingabe-Traggerüstmodul 03a und dem Ausgabe-Traggerüstmodul 03b, die bereits zur Herstellung der Überflurfördereinrichtung 01 Verwendung finden. Zusätzlich umfasst die Überflurfördereinrichtung 51 ein Zwischen-Traggerüstmodul 03c, um auf diese Weise die Länge der Überflurfördereinrichtung entsprechend zu vergrößern. Die einzelnen Traggerüstmodule 03a, 03b und 03c sind dabei in den Zwischenebenen 53 und 54 mittels Befestigungseinrichtungen miteinander verbunden. In den Trennebenen 53 und 54 liegen die jeweils benachbarten Traggerüstmodule 03a, 03b und 03c gemeinsam auf jeweils einem Säulenportal 48 auf. Außerdem sind in den Zwischenebenen 53 und 54 Ausgleichselemente angeordnet, um Vibrationen abzudämpfen und Temperaturspannungen abzubauen.

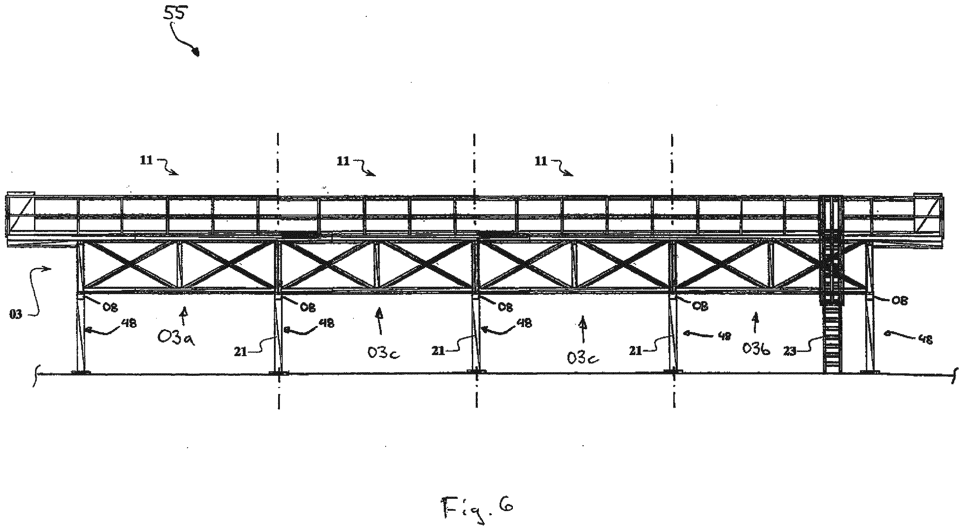

Fig. 6 zeigt eine dritte beispielhafte Überflurfördereinrichtung 55, die aus dem Traggerüstmodul 52 abgeleitet ist. Zur Herstellung des Traggerüstmoduls 55 werden ein Eingabe-Traggerüstmodul 03a, ein Ausgabe-Traggerüstmodul 03b und zwei baugleiche Zwischen-Traggerüstmodule 03c miteinander kombiniert und hintereinander angeordnet. Die in Serienfertigung hergestellten beiden Zwischen-Traggerüstmodule 03c sind im Wesentlichen baugleich und können somit sehr kostengünstig in Serie hergestellt werden.

Fig. 7 zeigt eine zweite Überflurfördereinrichtung 30 in Ansicht von vorne. Die Überflurfördereinrichtung 30 ist zum Transport von Fahrzeugkomponenten 31 entlang eines Förderkorridors 32 vorgesehen. Die eigentliche Förderbewegung zum Transport der Fahrzeugkomponenten 31 wird dabei durch eine Fördereinrichtung 33, beispielsweise einem Schubförderer, aufgebracht. Die Fördereinrichtung 33 ist mit Kopplungsorganen 34 an den Fahrzeugkomponenten 31 befestigt. Die Fördereinrichtung 33 ihrerseits ist an den Seiten an zwei Seitenteilen 35 und 36 aufgelegt und befestigt. Die Seitenteile 35 und 36 werden unterhalb des Förderkorridors 32 durch ein Bodenteil 37 miteinander verbunden. Die beiden Seitenteile 35 und 36 und das Bodenteil 37 bilden gemeinsam ein Traggerüst 38, das eine U-förmige Rinnenform aufweist und den Förderkorridor 32 jeweils seitlich und von unten begrenzt. Das Traggerüst 38 besteht aus hintereinander angeordneten Traggerüstmodulen 38a und 38b (in Fig. 7 nicht dargestellt) und ist selbsttragend ausgeführt. Die Traggerüstmodule 38a und 38b können in vormontierter Form von einem Herstellungsort zum Verwendungsort transportiert werden. Das selbsttragend ausgeführte Traggerüst 38 wird zur Herstellung der Überflurfördereinrichtung 30 von oben auf mehrere hintereinander angeordnete Säulenportale 39 aufgelegt und befestigt. Jedes Säulenportal besteht aus zwei Stützsäulen 40 und 41 und einer zwischen den beiden Stützsäulen 40 und 41 angebrachten Querbrücke 42. An den unteren Enden der Seitenteile 35 und 36 und an der Oberseite der Querbrücke 42 sind jeweils Befestigungslaschen 43 und 44 vorgesehen, die eine Ausrichtung des Traggerüsts 38 auf den Säulenportalen 39 und eine anschließende Fixierung ermöglichen. Die Stützsäulen 40 und 41 sowie die Querbrücke 42 sind aus rechteckförmigen Rohren hergestellt und weisen an ihren aneinanderliegenden Enden jeweils einen Gehrungsschnitt auf, so dass die Endquerschnitte der beiden Stützsäulen flächenbündig auf den Endquerschnitten der Querbrücke zur Anlage kommen. Zur Verbindung der Stützsäulen 40 und 41 und der Querbrücke 42 sind die auf Gehrung geschnittenen Endquerschnitte mit Schweißnähten 45 miteinander verschweißt.

Um die Säulenportale auf geringem Transportraum transportieren zu können, können die beiden Stützsäulen in zwei Teile zerlegt werden. Dazu sind an den Stützsäulen 40 und 41 jeweils Verbindungsstellen 46 vorgesehen, in denen die Stützsäulen 40 und 41 in zwei Teile 40a und 40b bzw. 41a und 41b zerlegt werden können.

## Patentansprüche

1. Überflurfördereinrichtung (01, 30, 52, 55) zur Integration in einer Montageanlage zum Transport von Fahrzeugkomponenten (31) mittels einer auf der Überflurfördereinrichtung (01, 30, 52, 55) angeordneten Fördereinrichtung (33), mit einem Traggerüst (03, 38), wobei das Traggerüst (03, 38) eine Länge von mehr als 5 m und eine Breite von mehr als 2 m aufweist, und wobei die Fördereinrichtung (33) am Traggerüst (03, 38) montierbar ist, und wobei Traggerüst (03, 38) und Fördereinrichtung (33) einen Förderkorridor (32) bilden, in dem die Fahrzeugkomponenten (31) von einer Eingabestelle zu einer Ausgabestelle transportiert werden können, und wobei das Traggerüst (03, 38) mit Lagerungsmitteln (39, 48) über dem Boden (47) der Montageanlage gelagert ist, und wobei durch die Lagerungsmittel (39, 48) zwischen der Unterseite des Traggerüsts (03, 38) und der Oberseite des Bodens (47) ein zur Bauteilmontage und/oder zum Baüteiltransport geeigneter, begehbarer und/oder befahrbarer Freiraum gebildet wird, wobei
das Traggerüst (03, 38) aus zumindest zwei in Richtung des Förderkorridors (32) hintereinander angeordneten Traggerüstmodulen (03a, 03b, 03c, 38a, 38b) gebildet ist
**dadurch gekennzeichnet,**
**dass** die Traggerüstmodule (03a, 03b, 03c, 38a, 38b) in der Art eines räumlichen Fachwerks ausgeführt sind, welche längsgerichtete und quergerichtete und diagonale und aufrechte miteinander verbundene Tragbalkenelemente (04, 05, 06, 07) umfassen, wobei die Tragbalkenelemente (04, 05, 06, 07) einen geschlossenen Rohrquerschnitt aufweisen.

2. Überflurfördereinrichtung nach Anspruch 1,
**dadurch gekennzeichnet,**
**dass** die Traggerüstmodule (03a, 03b, 03c, 38a, 38b) am Übergang zu benachbarten Traggerüstmodulen (03a, 03b, 03c, 38a, 38b) Befestigungseinrichtungen aufweisen, die die Verbindung von benachbarten Traggerüstmodulen (03a, 03b, 03c, 38a, 38b) ermöglichen.

3. Überflurfördereinrichtung nach Anspruch 1 oder 2,
**dadurch gekennzeichnet,**
**dass** die Überflurfördereinrichtung (01, 30, 52, 55) ein Eingabe-Traggerüstmodul (03a, 38a), an dem die Eingabestelle für die Fahrzeugkomponenten (31) vorgesehen ist, und ein Ausgabe-Traggerüstmodul (03b, 38b), an dem die Ausgabestelle für die Fahrzeugkomponenten (31) vorgesehen ist, aufweist.

4. Überflurfördereinrichtung nach Anspruch 3,
**dadurch gekennzeichnet,**
**dass** zwischen dem Eingabe-Traggerüstmodul (03a) und dem Ausgabe-Traggerüstmodul (03b) ein Zwischen-Traggerüstmodul (03c) vorgesehen ist.

5. Überflurfördereinrichtung nach Anspruch 4,
**dadurch gekennzeichnet,**
**dass** die Überflurfördereinrichtung (55) mehrere Zwischen-Traggerüstmodule (03c) umfasst, wobei die Zwischen-Traggerüstmodule (03c) im Wesentlichen baugleich ausgebildet sind.

6. Überflurfördereinrichtung nach einem der Ansprüche 1 bis 5,
**dadurch gekennzeichnet,**
**dass** zwischen benachbarten Traggerüstmodulen (03a, 03b, 03c, 38a, 38b) Ausgleichselement angeordnet sind, mit denen Vibrationen zwischen den Traggerüstmodulen gedämpft und/oder Temperaturspannungen abgebaut werden können.

7. Überflurfördereinrichtung nach einem der Ansprüche 1 bis 6,
**dadurch gekennzeichnet,**
**dass** an zumindest einem Traggerüstmodul (03a, 03b, 03c, 38a, 38b) ein Lagerungsmittel in der Art eines Säulenportals (39, 48) vorgesehen ist, wobei das Säulenportal (39, 48) zumindest zwei Stützsäulen umfasst (21, 40, 41), deren unteren Enden auf dem Boden (47) der Montageanlage angebracht werden, und wobei zwischen den zwei Stützsäulen (21, 40, 41) zumindest eine Querbrücke (08, 42) angebracht ist, und wobei das Traggerüstmodul (03a, 03b, 03c, 38a, 38b) auf der Oberseite der Querbrücke angeordnet ist.

8. Überflurfördereinrichtung nach einem der Ansprüche 1 bis 7,
**dadurch gekennzeichnet,**
**dass** die Traggerüstmodule (03a, 03b, 03c, 38a, 38b) selbsttragend ausgeführt sind und vormontiert transportiert werden können.

9. Überflurfördereinrichtung nach einem der Ansprüche 1 bis 8,
**dadurch gekennzeichnet,**
**dass** die Traggerüstmodule (03a, 03b, 03c, 38a, 38b) zumindest zwei Seitenteile (35, 36, 49, 50) umfassen, die sich parallel zur Längsachse des Förderkorridors (32) erstrecken und den Querschnitt des Förderkorridors (32) Rechts und Links begrenzen.

10. Überflurfördereinrichtung nach einem der Ansprüche 1 bis 9,
**dadurch gekennzeichnet,**
**dass** die Fördereinrichtung (33) zwischen den beiden Seitenteilen montierbar ist (35, 36, 49, 50) und den Querschnitt des Förderkorridors (32) von oben begrenzt.

11. Überflurfördereinrichtung nach einem der Ansprüche 1 bis 10,
**dadurch gekennzeichnet,**
**dass** die Traggerüstmodule (03a, 03b, 03c, 38a, 38b) jeweils zumindest ein Bodenteil (37, 51) umfassen, das den Querschnitt des Förderkorridors (32) von unten begrenzt.

12. Überflurfördereinrichtung nach einem der Ansprüche 1 bis 11,
**dadurch gekennzeichnet,**
**dass** an zumindest einem Traggerüstmodul (03a, 03b, 03c, 38a, 38b) entlang der Längsseite der Fördereinrichtung (33) ein Wartungsgang angebracht ist.

13. Überflurfördereinrichtung nach einem der Ansprüche 1 bis 12,
**dadurch gekennzeichnet,**
**dass** die Traggerüstmodule (03a, 03b, 03c, 38a, 38b) von einer Schweißkonstruktion gebildet werden.

## Claims

1. An overhead conveying device (01, 30, 52, 55) for integration in an assembly plant in order to transport vehicle components (31) by means of a conveying device (33) arranged on the overhead conveying device (01, 30, 52, 55), said overhead conveying device having a supporting framework (03, 38), wherein the supporting framework (03, 38) has a length greater than 5 m and a width greater than 2 m, and wherein the conveying device (33) can be mounted at the supporting framework (03, 38), and wherein the supporting framework (03, 38) and the conveying device (33) form a conveying corridor (32), in which the vehicle components (31) can be transported from an input point to an output point, and wherein the supporting framework (03, 38) is borne above the floor (47) of the assembly plant by bearing means (39, 48), and wherein a free space, which is suitable for component assembly and/or for component transport and which can be walked and/or driven through, is formed between the underside of the supporting framework (03, 38) and the upper side of the floor (47) by the bearing means (39, 48),
wherein the supporting framework (03, 38) is formed from at least two supporting framework modules (03a, 03b, 03c, 38a, 38b) arranged one after another in the direction of the conveying corridor (32),
**characterised in that**
the supporting framework modules (03a, 03b, 03c, 38a, 38b) are designed in the manner of a spatial truss and comprise longitudinally and transversely oriented and diagonal and upright interconnected supporting beam elements (04, 05, 06, 07), wherein the supporting beam elements (04, 05, 06, 07) have a closed tubular cross-section.

2. The overhead conveying device according to claim 1,
**characterised in that**
the supporting framework modules (03a, 03b, 03c, 38a, 38b), at the transition to adjacent supporting framework modules (03a, 03b, 03c, 38a, 38b), have fastening devices, which make it possible to connect adjacent supporting framework modules (03a, 03b, 03c, 38a, 38b).

3. The overhead conveying device according to claim 1 or 2,
**characterised in that**
the overhead conveying device (01, 30, 52, 55) has an input supporting framework module (03a, 38a), at which the input point for the vehicle components (31) is disposed, and an output supporting framework module (03b, 38b), at which the output point for the vehicle components (31) is disposed.

4. The overhead conveying device according to claim 3,
**characterised in that**
an intermediate supporting framework module (03c) is disposed between the input supporting framework module (03a) and the output supporting framework module (03b).

5. The overhead conveying device according to claim 4,
**characterised in that**
the overhead conveying device (55) comprises several intermediate supporting framework modules (03c), wherein the intermediate supporting framework modules (03c) are embodied so as to be substantially identical in construction.

6. The overhead conveying device according to any one of the claims 1 to 5,
**characterised in that**
between adjacent supporting framework modules (03a, 03b, 03c, 38a, 38b), compensating elements are arranged, with which vibrations between the supporting framework modules can be cushioned and/or with which thermal stresses can be relieved.

7. The overhead conveying device according to any one of the claims 1 to 6,
**characterised in that**
a bearing means in the manner of a column gantry (39, 48) is disposed at at least one supporting framework module (03a, 03b, 03c, 38a, 38b), wherein the column gantry (39, 48) comprises at least two support columns (21, 40, 41), whose lower ends are affixed on the floor (47) of the assembly plant, and wherein at least one transverse bridge (08, 42) is affixed between the two support columns (21, 40, 41), and wherein the supporting framework module (03a, 03b, 03c, 38a, 38b) is arranged on the upper side of the transverse bridge.

8. The overhead conveying device according to any one of the claims 1 to 7,
**characterised in that**
the supporting framework modules (03a, 03b, 03c, 38a, 38b) are designed so as to be self-supporting and can be transported in preassembled form.

9. The overhead conveying device according to any one of the claims 1 to 8,
**characterised in that**
the supporting framework modules (03a, 03b, 03c, 38a, 38b) comprise at least two side parts (35, 36, 49, 50), which extend parallel to the longitudinal axis of the conveying corridor (32) and limit the cross-section of the conveying corridor (32) to the right and to the left.

10. The overhead conveying device according to any one of the claims 1 to 9,
**characterised in that**
the conveying device (33) can be mounted between the two side parts (35, 36, 49, 50) and limits the cross-section of the conveying corridor (32) from the top.

11. The overhead conveying device according to any one of the claims 1 to 10,
**characterised in that**
each of the supporting framework modules (03a, 03b, 03c, 38a, 38b) comprises at least one floor part (37, 51), which limits the cross-section of the conveying corridor (32) from below.

12. The overhead conveying device according to any one of the claims 1 to 11,
**characterised in that**
a maintenance walkway is affixed to at least one supporting framework module (03a, 03b, 03c, 38a, 38b) along the longitudinal side of the conveying device (33).

13. The overhead conveying device according to any one of the claims 1 to 12,
**characterised in that**
the supporting framework modules (03a, 03b, 03c, 38a, 38b) are formed by a welded structure.

## Revendications

1. Dispositif (01, 30, 52, 55) de convoyeur aérien pour être intégré dans une usine d'assemblage pour transporter des composants (31) de véhicule au moyen d'un dispositif (33) de convoyeur qui est disposé sur le dispositif (01, 30, 52, 55) de convoyeur aérien, ledit dispositif de convoyeur aérien comprenant un cadre (03, 38) de support, ledit cadre (03, 38) de support ayant une longueur de plus de 5 m et une largeur de plus de 2 m, et ledit dispositif (33) de convoyeur pouvant être monté sur le cadre (03, 38) de support, et ledit cadre (03, 38) de support et ledit dispositif (33) de convoyeur formant un couloir (32) de convoyeur dans lequel les composants (31) de véhicule peuvent être transportés d'un point d'entrée vers un point de sortie, et ledit cadre (03, 38) de support étant monté au-dessus du fond (47) de l'usine d'assemblage par des moyens (39, 48) d'appui, et lesdits moyens (39, 48) d'appui occasionnant la formation, entre le côté inférieur du cadre (03, 38) de support et le côté supérieur du fond (47), d'un espace libre qui est approprié pour l'assemblage des composants et/ou pour le transport des composants et qui est accessible à pied et/ou par véhicule, dans lequel
le cadre (03, 38) de support est formé d'au moins deux modules (03a, 03b, 03c, 38a, 38b) de cadre de support qui sont disposés l'un derrière l'autre dans la direction du couloir (32) de convoyeur,
**caractérisé en ce que**
les modules (03a, 03b, 03c, 38a, 38b) de cadre de support sont réalisés à la manière d'un colombage spatial qui comporte des éléments (04, 05, 06, 07) de poutre de support orientés longitudinalement et transversalement et interconnectés diagonalement et verticalement, lesdits éléments (04, 05, 06, 07) de poutre de support présentant une coupe transversale tubulaire fermée.

2. Dispositif de convoyeur aérien selon la revendication 1,
**caractérisé en ce que**
les modules (03a, 03b, 03c, 38a, 38b) de cadre de support, à la jonction avec des modules (03a, 03b, 03c, 38a, 38b) de cadre de support adjacents, présentent des dispositifs de fixation qui permettent la liaison de modules (03a, 03b, 03c, 38a, 38b) de cadre de support adjacents.

3. Dispositif de convoyeur aérien selon la revendication 1 ou 2,
**caractérisé en ce que**
le dispositif (01, 30, 52, 55) de convoyeur aérien présente un module (03a, 38a) de cadre de support d'entrée, le point d'entrée pour les composants (31) de véhicule étant prévu sur ledit module de cadre de support d'entrée, et un module (03b, 38b) de cadre de support de sortie, le point de sortie pour les composants (31) de véhicule étant prévu sur ledit module de cadre de support de sortie.

4. Dispositif de convoyeur aérien selon la revendication 3,
**caractérisé en ce qu'**
un module (03c) de cadre de support intermédiaire est prévu entre le module (03a) de cadre de support d'entrée et le module (03b) de cadre de support de sortie.

5. Dispositif de convoyeur aérien selon la revendication 4,
**caractérisé en ce que**
le dispositif (55) de convoyeur aérien comporte plusieurs modules (03c) de cadre de support intermédiaires, lesdits modules (03c) de cadre de support intermédiaires étant réalisés essentiellement de construction identique.

6. Dispositif de convoyeur aérien selon l'une quelconque des revendications 1 à 5,
**caractérisé en ce que**
des éléments de compensation sont disposés entre des modules (03a, 03b, 03c, 38a, 38b) de cadre de support adjacents, des vibrations entre les modules de cadre de support pouvant être atténuées et/ou des contraintes thermiques pouvant être baissées par lesdits éléments de compensation.

7. Dispositif de convoyeur aérien selon l'une quelconque des revendications 1 à 6,
**caractérisé en ce que**
sur au moins un module (03a, 03b, 03c, 38a, 38b) de cadre de support, un moyen d'appui à la manière d'un portique de colonne (39, 48) est prévu, ledit portique de colonne (39, 48) comportant au moins deux colonnes (21, 40, 41) de support dont les extrémités inférieures sont montées au fond (47) de l'usine d'assemblage, et au moins un pont transversal (08, 42) étant monté entre les deux colonnes de support (21, 40, 41), et ledit module (03a, 03b, 03c, 38a, 38b) de cadre de support étant disposé sur le côté supérieur du pont transversal.

8. Dispositif de convoyeur aérien selon l'une quelconque des revendications 1 à 7,
**caractérisé en ce que**
les modules (03a, 03b, 03c, 38a, 38b) de cadre de support sont réalisés de manière autoportante et peuvent être transportés dans une forme préassemblée.

9. Dispositif de convoyeur aérien selon l'une quelconque des revendications 1 à 8,
**caractérisé en ce que**
les modules (03a, 03b, 03c, 38a, 38b) de cadre de support comportent au moins deux pièces latérales (35, 36, 49, 50) qui s'étendent en parallèle par rapport à l'axe longitudinal du couloir (32) de convoyeur et limitent la coupe transversale du couloir (32) de convoyeur à droite et à gauche.

10. Dispositif de convoyeur aérien selon l'une quelconque des revendications 1 à 9,
**caractérisé en ce que**
le dispositif (33) de convoyeur peut être monté entre les deux pièces latérales (35, 36, 49, 50) et limite la coupe transversale du couloir (32) de convoyeur par le haut.

11. Dispositif de convoyeur aérien selon l'une quelconque des revendications 1 à 10,
**caractérisé en ce que**
les modules (03a, 03b, 03c, 38a, 38b) de cadre de support chacun comportent au moins une pièce (37, 51) de fond qui limite la coupe transversale du couloir (32) de convoyeur par le bas.

12. Dispositif de convoyeur aérien selon l'une quelconque des revendications 1 à 11,
**caractérisé en ce qu'**
un couloir de service est monté à au moins un module (03a, 03b, 03c, 38a, 38b) de cadre de support, le long du côté longitudinal du dispositif (33) de convoyeur.

13. Dispositif de convoyeur aérien selon l'une quelconque des revendications 1 à 12,
**caractérisé en ce que**
les modules (03a, 03b, 03c, 38a, 38b) de cadre de support sont formés par une construction de soudure.
